# EUROPEAN PATENT APPLICATION

(11) **EP 0 897 869 A1**
(43) Date of publication of application: **24.02.1999**
(21) Application number: 98115634.2
(22) Date of filing: 19.08.1998
(51) Int. Cl.: B65B 55/02, B65B 55/10

(54) **Method and apparatus for packaging food in containers and method for sterilising such an apparatus**

(30) Priority: 22.08.1997 JP 226016/97
(71) Applicant: HOUSE FOODS CORPORATION, Higashi-Osaka-shi, Osaka-fu (JP)
(72) Inventor: Shimizu, Takaaki, Yotsukaido-shi, Chiba-ken (JP)
(74) Representative: Müller-Boré & Partner Patentanwälte

(57) **Abstract**

An apparatus 100 for manufacturing food in containers comprises a container feeding section 102, a container sterilizing section 104, a container inverting section 106, a solid food material filling section 108, a closure feeding section 110, a closure sealing section 112 and a product delivery section 114. Steam or hypersteam is fed into the jacket of the apparatus 100 to heat the inner wall surface of the apparatus 100 for manufacturing food in containers. Thus, an apparatus for manufacturing food in containers according to the invention is practically free from microbes that can adversely affect the finished products.

## Description

### BACKGROUND OF THE INVENTION

This invention relates to an apparatus for manufacturing food in containers, to a method of sterilizing such an apparatus and also to a method of manufacturing food in containers. Particularly, the present invention relates to a germ-free apparatus for manufacturing food in containers that can effectively and efficiently maintain the quality of food for a long time, to a method of sterilizing such an apparatus and also to a method of manufacturing food in containers by means of such an apparatus.

Japanese Patent Application Laid-Open No. JP-A-Heisei-9-84567(1997) describes a known food sterilizing apparatus comprising a plurality of cassette-receiving-type sterilizer units that can sterilize food in a short period of time. Each cassette contains a plurality of containers and cassettes are fed into the sterilizer units intermittently by means of an endless cassette transporting conveyor system. The sterilizers are operated continuously on a batch basis to sterilize the solid food contained therein with steam. After the sterilization step, the cassettes are removed from the sterilizers and transferred into a clean booth, wherethey are packaged by an automatic packaging device for delivery.

However, the above described known food sterilizing apparatus is accompanied by the following problems.
(1) Food can be contaminated by microbes when containers are sealed in a clean booth.
(2) Since containers are sealed with air contained therein, the food in the containers can be adversely affected by air and become degraded in the long run.

The inventors of the present invention have paid massive efforts in developing a novel method and a novel apparatus of manufacturing food in containers on the basis of a new idea of carrying out all the steps of manufacturing food in a steam atmosphere until the containers containing food are hermetically sealed.

In the course of development, however, the inventors encountered the following problems to be dissolved.
(1) Drained water can adhere to the inner wall surface of the food manufacturing apparatus to make it difficult to keep the inside of the apparatus in a germ-free condition.
(2) After washing the inside of the food manufacturing apparatus, water drops can be left in the apparatus and it is extremely difficult to completely remove water drops from the inside of the apparatus. If sterilizer gas is introduced into the food manufacturing apparatus while the latter containingwater drops, the sterilizer gas is diluted by the water drops tomake it difficult to perfectly sterilize the apparatus particularly in areas where the apparatus shows an intricate profile. Additionally, the inside of the food manufacturing apparatus has to be dried to remove any residual water drops andsterilizer solution. Such a drying operation takes a long time to be performed.
(3) Containers can be moved into a steam chamber with air contained in them that can adversely affect the food contained in the containers.

Therefore, it is an object of the present invention to solve the above problems by providing an apparatus for manufacturing food in containers that is free from contamination by microbes particularly in the inside of the containers and during the steps between the sterilization of food and the operation of sealing the containers and also a method of sterilizing such an apparatus for manufacturing food in containers.

Another object of the invention is to provide a method of manufacturing food in containers adapted to transport containers into a steam chamber free from air in the inside of the containers.

Still another object of the invention is to provide a method of manufacturing food in containers adapted to seal containers in a stabilized environment of steam.

### SUMMARY OF THE INVENTION

According to an aspect of the invention, the above objects are achieved by providing an apparatus for manufacturing food incontainers adapted to sealing containers containing sterilized food in a steam atmosphere, said apparatus comprising a casing for containing steam and a heating means for maintaining the inner wall of said casing in a heated state.

With such an arrangement, the inside of the apparatus for manufacturing food in containers can be held free from drained water and hence from microbes.

According to another aspect of the invention, there is provided a method of sterilizing an apparatus for manufacturing food in containers comprising steps of heating the wall surface of a casing for containing steam; injecting an atomized or vaporized germicidal agent into theinside of said apparatus; and replacing said germicidal agent in the inside of said apparatus with steam.

With such a method of sterilizing an apparatus for manufacturing food in containers, even areas in the inside of the apparatus having an intricate profile can be reliably sterilized in a short period of time. Additionally, any residual agent and/or detergent remaining in the inside of the apparatus can beremoved without difficulty.

According to still another aspect of the invention, there is provided a method of manufacturing food in containers comprising steps of sterilizing containers; moving said containers into a germ-free air chamber; moving said containers into a steam chamber of an apparatus for manufacturing food in containers with the openings of the containers facing downward; and turning said containers so as to make their openings face upward in said steam chamber.

According to the invention, there is also provided a method of manufacturing food in containers comprising steps of sterilizing containers; moving said containers into a germ-free air chamber; moving said containers into a steam chamber of an apparatus for manufacturing food in containers through the interface of the germ-free air chamber and the steam chamber, turning said container so as to make their openings face downward; and holding said container in the steam chamber with their openings facing upward.

With such a method, sterilized containers can be held in a germ-free state. Additionally, the sterilized containers are prevented from entering a steam atmosphere with air contained therein.

According to the invention, there is also provided a methodof manufacturing food in containers comprising steps of moving containers into a steam chamber of an apparatus for manufacturing food in containers with the openings of the containers facing downward; and turning said containers so as to make their openings face upward in said steam chamber.

With such a method, containers are also prevented from entering a steam atmosphere with air contained therein when they are moving.

According to the invention, there is also provided a method of manufacturing food in containers comprising steps of moving containers into a steam chamber of an apparatus for manufacturing food in containers through the interface between a germ-free air and the steam, turning said container so as to make their openings face downward; and holding said container in the steam chamber with their openings facing upward.

With such a method again, containers are prevented from entering a steam atmosphere with air contained therein when they are moving.

According to the invention, there is also provided a method of manufacturing food in containers comprising steps of filling containers with food and sterilizing the food in a steam chamber or filling sterilized containers with food in a steam chamber; causing inert gas, such as nitrogen, to flow into the head spaces of said containers in a steam atmosphere; and subsequently sealing said containers in the steam atmosphere.

With such a method of manufacturing food in containers, containers can be sealed with an air-free state in the inside and the containers are free from deformation if the temperature of the food contained in the containers drops.

If inert gas is used, preferably the temperature of the inert gas is between 0 ° C and 50° C and the flow rate of inert gas is between 3 m/min and 60 m/min.

Under the above conditions, inert gas can be reliably fed into the head spaces of the containers without adversely affecting the steam atmosphere.

### BRIEF DESCRIPTION OF THE DRAWINGS

FIG. 1 is a schematic perspective view of an embodiment of apparatus for manufacturing food in containers according to the invention, showing its overall configuration.
FIG. 2 is a schematic cross sectional view of the embodiment of FIG. 1 as viewed in the direction indicated by arrow 2A in FIG. 1.
FIG. 3 is a schematic cross sectional view of the embodiment of FIG. 1 as viewed in the direction indicated by arrow 3A in FIG. 1.
FIG. 4 is a schematic cross sectional view of the closure-feeding section of the embodiment of FIG. 1.
FIG. 5 is a schematic cross sectional view of the embodiment of FIG. 1 as viewed in the direction indicated by arrow 5A in FIG. 1.
FIG. 6 is a schematic cross sectional view of another embodiment of apparatus for manufacturing food in containers according to the invention.

### DETAILED DESCRIPTION OF THE PREFERRED EMBODIMENTS

Now, the present invention will be described in greaterdetail by referring to the accompanying drawings that illustrate preferred embodiments of the invention.

### (1) the first embodiment of apparatus for manufacturing food incontainers

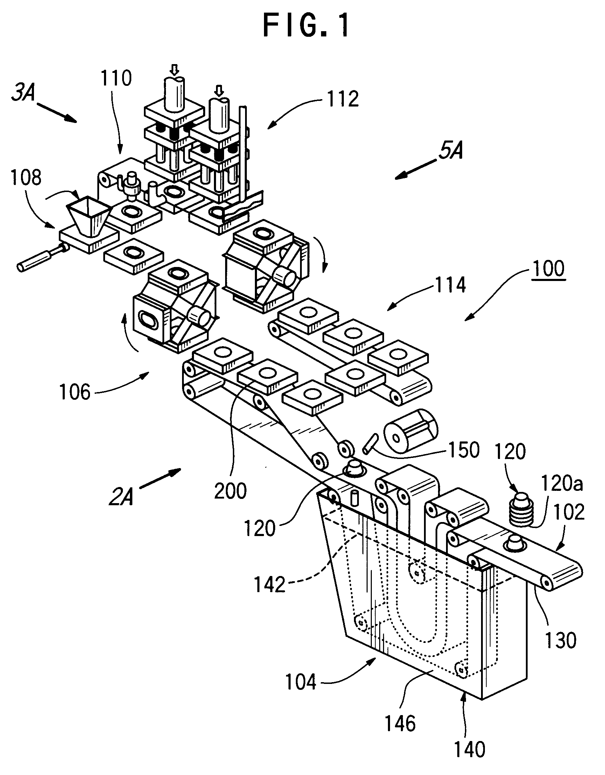

Referring to FIG. 1, a first embodiment of apparatus 100 for manufacturing food in containers according to the invention comprises a container feeding section 102, a container sterilizing section 104, a container inverting section 106, a solid food material filling section 108, a closure feeding section 110, a closure sealing section 112 and a product delivery section 114. Containers 120 are fed into the apparatus 100 from the container feeding section 102.

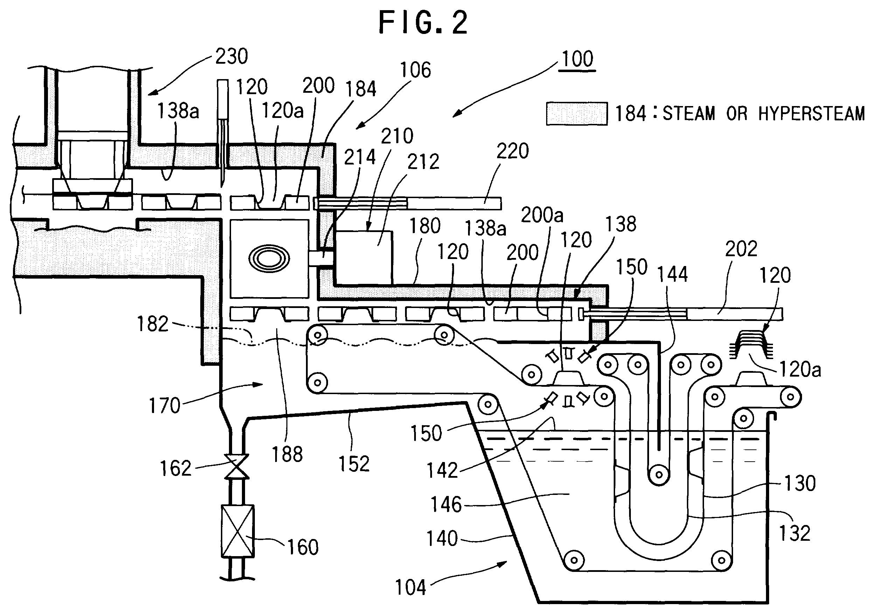

Referring now to FIGS. 1 and 2, an endless container transporting conveyor belt 130 is arranged in the container feeding section 102 to transport containers 120. Containers 120 are arranged on the container transporting conveyor belt 130 with their openings 120 facing downward.

A container sterilizing H₂O₂ bath 140 is arranged in the container sterilizing section 104. Hydrogen peroxide H₂O₂ 146 is contained in the container sterilizing H₂O₂ bath 140. The container transporting conveyor belt 130 partly passes through the H₂O₂ contained in the container sterilizing H₂O₂ bath 140. An endless container guide conveyor 132 is arranged vis-a-vis part of the container transporting conveyor belt 130. The container guide conveyor belt 132 partly passes through the H₂O₂ contained in the container sterilizing H₂O₂ bath 140. A gap is provided between the container guide conveyor belt 132 and the container transporting conveyor belt 130 so that containers 120 may be held therebetween. A Casing 138 has a bath sealing section 144 extending into the container sterilizing H₂O₂ bath 140.

Dryer nozzles 150 for drying H₂O₂ is arranged above the interface of germ-free air and hydrogen peroxide liquid at a position downstream relative to the container sterilizing H₂O₂ bath 140. The dryer nozzles 150 are arranged to blow hot and dry germ-free air onto containers 120 on the container transporting conveyor belt 130.

The casing 138 has a germ-free air container 152 in the inside, which is maintained in a germ-free state by germ-free airfed from the dryer nozzles 150. Then, germ-free air 170 is discharged from the germ-free air container 152 by way of a valve 162 at a rate that is regulated as a function of the rate of supply of germ-free air blown in through the dryer nozzles 150. A germ-free air/hydrogen peroxide liquid interface 142 is produced between H₂O₂ 146 and germ-free air 170. The bath sealing section 144 of the casing 138 extends into the container sterilizing H₂O₂ bath 140 through the germ-free air/hydrogen peroxide liquid interface 142.

A jacket 180 is arranged around the outer periphery of the casing 138 as extension of the germ-free air container 152. The jacket 180 substantially surrounds the portion of the casing 138 that contains germ-free steam to be used for heating. Steam or hypersteam 184 fed from a steam source (not shown) for heating is led into the jacket 180 to heat the inner wall surface 138a of the casing 138. The temperature of steam or hypersteam 184 is preferably between about 100° C and about 103 ° C and constantly higher than the temperature of steam 188 contained in the casing 138. Thus, the steam source (not shown) and the jacket 180 constitute means for constantly heating the inner wall surface 138a of the casing 138.

Germ-free steam 188 is fed into the part of the casing 138 that is provided with the jacket 180. A steam/germ-free air interface 182 is produced near the link of the jacket 180 and the germ-free air container 152 of the casing 183. Germ-free steam 188 prevails above the steam/germ-free air interface 182.

The temperature of germ-free steam 188 is preferably between about 95° C and about 102 ° C and constantly lower than the temperature of steam or hypersteam 184 to be used for heating. This temperature difference can be achieved by reducing the pressure of germ-free steam 188 to a level lower than that of steam 184 to be used for heating. The difference between the pressure of germ-free steam 188 and that of steam 184 to be used for heating is preferably not lower than 196 Pa (about 20 mm water-gauge pressure).

Pallets 200 for transporting the container are placed on the container transporting conveyor belt 130 in the atmosphere of germ-free steam 188. Pallets 200 are typically made of aluminum or heat-resistant plastic and designed to hold containers 120 therein.

A first pallet mover 202 is arranged to cause pallets 200 to move downstream. The first pallet mover 202 is provided with a pneumatic cylinder and a piston that push pallets 200 away from it.

Each container 120 is held in the container receiving recess 200a of a pallet 200 with its opening facing downward.

A pallet inverting device 210 is arranged near the downstream extremity of the container transporting conveyor belt 130 in the atmosphere of germ-free steam 188 and provided with a motor 212 and an arm 214. The arm 214 is driven by the motor 212 to turn the pallet inverting device 210, thereby inverting the pallet 200 held by it and holding a container 120 therein. Therefore, after passing by the pallet inverting device 210, the containers 120 are held in the respective recesses 200a of the pallets 200 with their openings 120a facing upward.

A second pallet mover 220 is arranged to cause pallets 200 to move downstream in the atmosphere of germ-free steam 188. The second pallet mover 220 is provided with a pneumatic cylinder and a piston that push pallets 200 away from it.

The solid food material filling section 108 for filling containers 120 with solid food material is disposed downstream relative to the pallet inverting device 210.

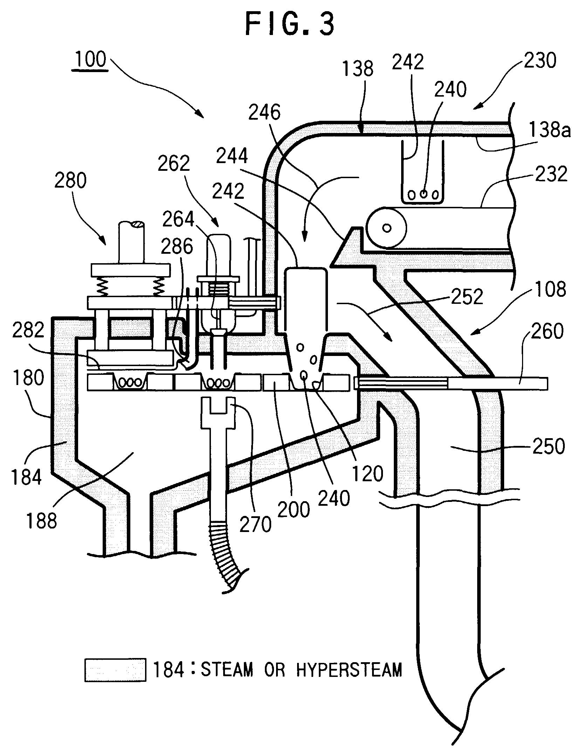

Referring now FIG. 3, a retainer transporting conveyor belt 232 is arranged in the solid food material filling section 108. Retainers 242 containing sterilized solid food material 240 are transported by the retainer transporting conveyor belt 232 arranged in a steam atmosphere.

A retainer inverting section 244 is arranged near the downstream extremity of the retainer transporting conveyor belt 232. Each retainer 242 is moved in the direction indicated by arrow 246 and turned upside down to throw the solid food material 240 contained in it into the container 120 located right therebelow. A retainer discharge path 250 is arranged downstream relative to the retainer inverting section 244. Thus, each retainer 242 that has thrown the solid food material 240 in it is moved through the retainer discharge path 250 in the direction indicated by arrow 252.

A third pallet mover 260 is arranged to cause pallets 200 to move further downstream. The third pallet mover 260 is provided with a pneumatic cylinder and a piston that push pallets 200 away from it.

A sauce filling section 262 is arranged downstream relative to the solid food material filling section 108. Sterilized liquid sauce is discharged into each container 120 containing solid food material 240 therein through a nozzle 264 of the sauce filling section 262. A nozzle cleaning adaptor 270 is arranged below the nozzle 264 in order to clean and sterilize the nozzle 264.

The closure feeding section 110 is disposed downstream relative to the sauce filling section 262. Closures 282 are typically made of sheet plastic and fed to respective containers 120 containing solid food material 240 therein in the closure feeding section 110. An inert gas, nitrogen feeding nozzle 286 for feeding inert gas, for example nitrogen gas (N₂), is arranged near the spot for putting a closure 282 in place in the closure feeding section 280.

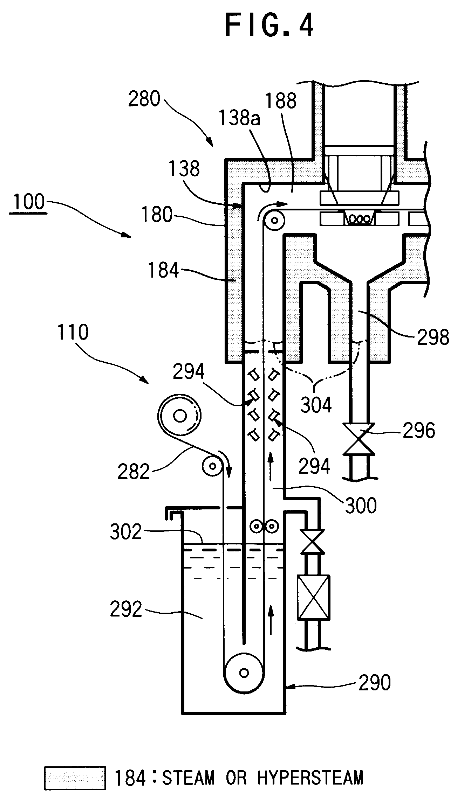

Referring now to FIG. 4, the closure feeding section 110 is provided with a H₂O₂ bath 290 for closures that contains H₂O₂ 292 init. Closures 282 made of sheet material are fed through the H₂O₂ bath 290 for closures. A closure dryer nozzle 294 is arranged above the H₂O₂ bath 290 for closures.

Germ-free air 300 is supplied between the H₂O₂ bath 290 for closures and the closure feeding section 280. A germ-free air/hydrogen peroxide liquid interface 302 is produced between germ-free air 300 and H₂O₂ 292. A steam/germ-free air interface 304 is produced between germ-free air 300 and germ-free steam 188. The closure dryer nozzle 294 is arranged in the atmosphere of germ-free air 300. After leaving the H₂O₂ bath 290 for closures, closures 282 are dried in the atmosphere of germ-free air 300 and then moved into the atmosphere of germ-free steam 188.

The closure feeding section 110 is provided with a nitrogen discharge path 298 for discharging nitrogen gas. The nitrogen discharge path 298 is provided with a nitrogen discharge valve 296 for controlling the flow of nitrogen through the nitrogen discharge path 298.

The jacket 180 surrounds the path of retainers 242 and that of pallets 200 in the solid food material filling section 108, the path of pal lets 200 in the sauce filling section 262 and that of dried closures 282 in the closure feeding section 110. As described earlier, steam or hypersteam 184 for heating is fed into the jacket 180. Germ-free steam 188 is fed into the path of retainers 242, that of pallets 200 and that of dried closures 282.

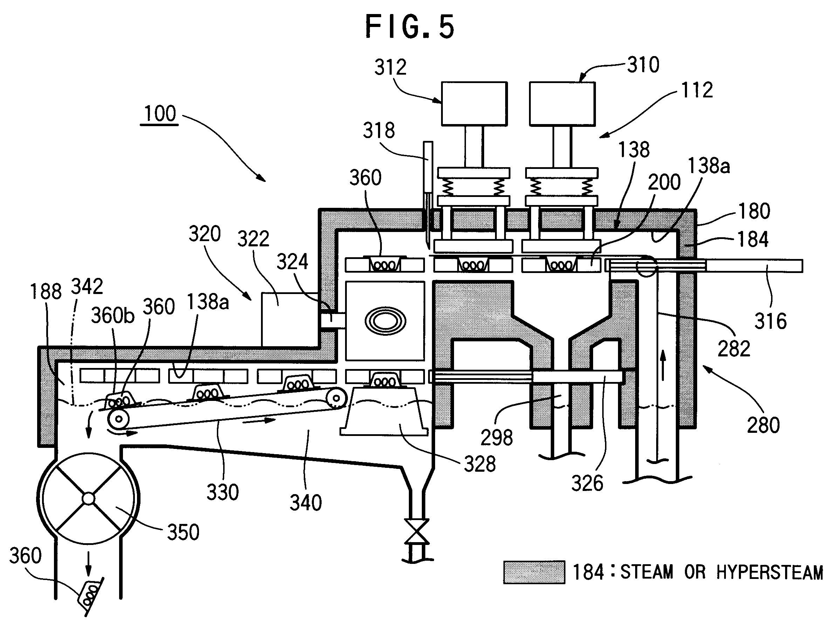

Referring now to FIG. 5, a first closure sealing device 310 and a second closure sealing device 312 are arranged downstream relative to the closure feeding section 110. A closure cutting device 318 is arranged downstream relative to the second closure sealing device 312. Thus, the closure sealing section 112 comprises the first closure sealing device 310, the second closure sealing device 312 and the closure cutting device 318.

A fourth pallet mover 316 is arranged to cause pallets 200 to move downstream. The fourth pallet mover 316 is provided with a pneumatic cylinder and a piston that push pallets 200 away from it.

A final pallet inverting device 320 is arranged downstream relative to the second closure sealing device 312 in order to invert pallets 200 that hold sealed containers 360 containing the finished food product, covered by a closure and sealed. The final pallet inverting device 320 is provided with a motor 322 and an arm 324. The arm 324 is driven by the motor 322 to turn, thereby inverting a pallet 200 holding a sealed container 360 containing the finished food product.

A fifth pallet mover 326 is arranged to cause pallets 200 to move downstream. The fifth pallet mover 326 is provided with a pneumatic cylinder and a piston that push pallets 200 away from it.

A container receiving member 328 is arranged below the final pallet inverting device 320 for receiving sealed containers 360 containing the finished food product.

A sealed container transporting conveyor belt 330 is arranged downstream relative to the final pallet inverting device 320. Therefore, after passing the final pallet inverting device 320, sealed containers 360 are placed on the sealed container transporting conveyor belt 330 with the bottom 360b facing upward.

The jacket 180 surrounds the path of pallets 200 in the first closure sealing device 310 and the second closure sealing device 312, the path of closures 200 in the final pallet inverting device 320 and the area above the sealed container transporting conveyor belt 330. As described earlier, steam 184 to be used for heating is fed into the jacket 180. Germ-free steam 188 is fed into the path of pallets 200.

Germ-free air 340 is fed downstream relative to the sealed container transporting conveyor belt 330. A steam/germ-free air interface is produced between air 340 and germ-free steam 188. Sealed containers 360 move from the atmosphere of germ-free steam 188 into the atmosphere of germ-free air 340. A rotary valve 350 is arranged downstream relative to the sealed container transporting conveyor belt 330 in order to prevent ambient air from entering the germ-free air 340.

Sealed containers 360 are then delivered from the apparatus 100 for manufacturing food in containers to the outside through the rotary valve 350.

Alternatively, it may be so arranged that the germ-free steam 188 is held in direct contact with ambient air without feeding germ-free air 340 into the apparatus 100 for manufacturing food in containers. With such an arrangement, the rotary valve 350 is eliminated.

### (2) the operation of the embodiment of apparatus for manufacturing food in containers

Now, the operation of the embodiment of apparatus for manufacturing food in containers will be described below.

The inside of the apparatus 100 for manufacturing food in containers is sterilized before containers 120 are filled with solid food material and sauce. Firstly, steam 184 to be used for heating is fed into the jacket 180 to heat the inner wall surface 138 of the casing 138 of the apparatus 100 for manufacturing food in containers.

Then, the inside of the apparatus 100 is filled with an atomized or germicidal agent such as H₂O₂ gas. Hydrogen peroxide or some other germicidal agent can be used for the purpose of the invention.

Then, the H₂O₂ gas in the inside of the apparatus 100 is replaced by steam. The temperature of the replacing steam should be lower than that of steam 284 to be used for heating and is preferably between about 95 ° C and about 102 ° C.

Thereafter, containers 120 are filled with sterilized food.

Referring to FIG. 2, containers 120 are moved on the container transporting conveyor belt 130 with their openings 120a facing downward.

The container guide conveyor belt 132 leads containers 120 to the container transporting conveyor belt 130. Containers 120 are then made to pass through the container sterilizing H₂O₂ bath 140 and sterilized.

Then, containers 120 are moved into the atmosphere of germ-free air 170 and dried by operating the dryer nozzle 150.

Steam 184 to be used for heating is held to temperature between about 100 ° C and 103 ° C and constantly fed into the jacket 180 in order to heat the inner wall surface of the apparatus 100.

Germ-free steam 188 held to temperature between about 95 ° C and about 102 ° C is fed into the space surrounded by the jacket 180 and located above the steam/germ-free air interface 182. The pressure of germ-free steam 188 is held lower than that of steam 184 to be used for heating. The pressure difference between germ-free steam 188 and steam 184 to be used for heating is held to about 196 Pa (about 20 mm water-gauge pressure).

Containers 120 are held in the respective recesses 200a of pallets 200 with their openings facing downward. Then, pallets 200 are moved by the container transporting conveyor belt 130. Then, the first pallet mover 202 is driven to push pallet 200 downstream.

Then, the pallet inverting device 210 is driven to turn pallets 200 upside down with containers 120 held in them. Thus, the containers 120 are held in the respective recesses 200a of the pallets 200 with their openings 120a facing upward.

Thus, according to the invention, containers 120 are brought into the atmosphere of germ-free steam 188 in the apparatus 100 for manufacturing food in containers with their openings 120a facing downward. Then, the pallet inverting device 210 is driven to turn the containers 120 upside down so that their openings 120a face upward. Therefore, containers 120 are prevented from moving into the atmosphere of germ-free steam 188 with air trapped in the inside of the containers 120 when the containers 120 are moved into the apparatus 100.

Alternatively, it may be so arranged that containers 120 are moved into the atmosphere of germ-free air 170 in the apparatus 100 with their openings facing downward and then turned upside down to make their openings face upward while they are moved to pass through the steam/germ-free air interface 182. Then, the containers 120 are held in the atmosphere of germ-free steam 188.

With this arrangement again, containers 120 are prevented from moving into the atmosphere of germ-free steam 188 with air trapped in the inside of the containers 120 when the containers 120 are moved into the apparatus 100.

For the purpose of the invention, the expression "the openings of containers facing downward" refers not only to a state where the openings are horizontal but also to a state where the containers are inclined to such an extent that air trapped in the containers may flow down in steam.

Then, the second pallet mover 220 is driven to move pallets 200.

Referring to FIG. 3, a retainer 242 containing solid food material 240 is turned upside down so that the sterilized solid food material 240 contained in the retainer 242 is thrown into a container 120. The solid food material may comprise meat or vegetable such as carrot or potato. The emptied retainer 242 is then discharged through the retainer discharge path 250.

Then, the third pallet mover 220 is driven to move pallets 200.

Sterilized sauce is poured into containers 120 containing solid food material 240. The sauce may be curry sauce, stew sauce or misosauce.

Then, closures 282 made of a sheet material are supplied. The head space of each container 120 is filled with nitrogen fed through the nitrogen feeding nozzle 286. For the purpose of the invention, the term "head space" refers to the void at the top of the inside of the container not filled with solid food material 240 and sauce.

Inert gas is preferably used to fill the head space. For the purpose of the invention, inert gas may be nitrogen or argon.

While no particular temperature is specified for inert gas for the purpose of the invention, it is preferably held to a low temperature level typically between about 0° C and about 50° C. Then, inert gas can easily move under steam so that the steam in the head space can reliably be replaced by inert gas.

Inert gas is preferably fed into the head space of the container 120 at a rate substantially same as the moving speed of the container 120. The rate of feeding inert gas is preferably between 3 m/min and 60 m/min.

The rate of feeding inert gas is preferably so selected that it may not give rise to any turbulence in the steam atmosphere. In other words, the rate of feeding inert gas should be so selected as to maintain the laminar flows in the apparatus 100.

The volume of inert gas to be fed into the head space of the container 120 is preferably between twice and three times of the volume of the head space.

Referring to FIG. 4, closures 282 made of a sheet material are dried as they are moved to pass through the H₂O₂ bath 290 for closures. Then, closures 282 are moved into the atmosphere of germ-free steam 188.

Steam 184 to be used for heating is fed into the jacket 180 surrounding the path of retainers 242 and that of pallets 200 in the solid food material filling section 108, the path of pallets 200 in the sauce filling section 262 and that of dried closures 282 in the closure feeding section 110, while germ-free steam 188 is fed into the path of retainers 284, that of pallets 200 and that of dried closures 282.

Referring now to FIG. 5, the first closure sealing device 310 puts the primary seal on a combination of a closure 282 and a container 120. Then, the second closure sealing device 312 puts the secondary seal on the combined closure 282 and container 120. A closure cutter 318 is driven to cut the closure 282 from the remaining closures 282.

After the completion of the sealing operation, the pallet 200 holding the sealed container 360 is moved by the fourth pal let mover 316.

Then, the final pallet inverting device 320 is driven to turn the sealed container 360 upside down.

Then, the fifth pallet mover 326 is driven to move the pallet 200 until the finished product 360 is received by the container receiving member 328.

The finished product 360 is then moved on the sealed container transporting conveyor belt 330 with its bottom 360b facing upward.

Steam 184 to be used for heating is fed into the jacket 180 surrounding the path of pallets 200 in the first closure sealing device 310 and the second closure sealing device 310, the path of pallets 200 in the final pal let inverting device 320 and the area above the sealed container transporting conveyor belt 330. Germ-free steam 188 is fed into the path of pallets 200.

Germ-free air 340 is fed to the downstream side of the sealed container transporting conveyor belt 330 to produce a steam/germ-free air interface 342. Sealed containers 360 are moved from the atmosphere of germ-free steam 188 to that of germ-free air 340.

Finished products 360 are then discharged through the rotary valve 350.

### (3) configuration of another embodiment of apparatus for manufacturing food in containers according to the invention

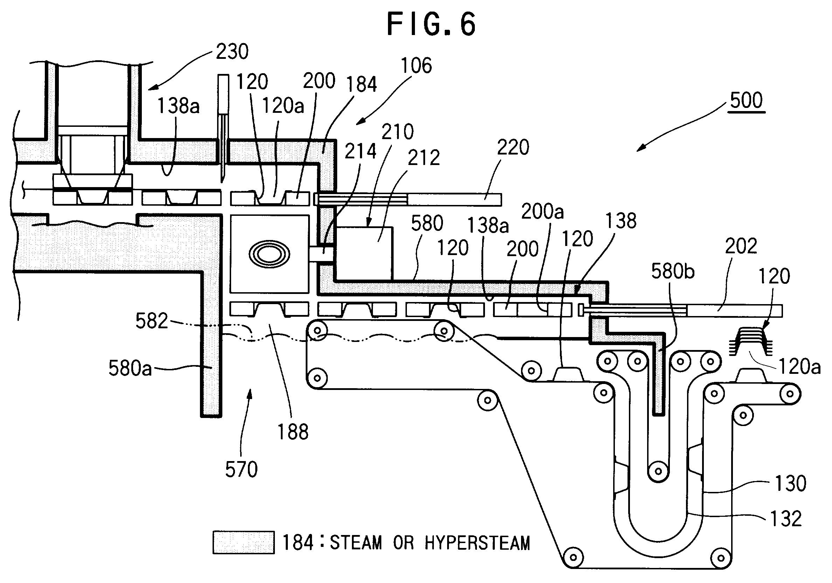

Referring to FIG. 6, this embodiment of apparatus 500 for manufacturing food in containers according to the invention comprises a container transporting conveyor belt 130 for moving containers 120 as in the case of the first embodiment of apparatus 100 for manufacturing food in containers shown in FIG. 2.

This embodiment of apparatus 500 for manufacturing food in containers differs from the first embodiment of apparatus 100 for manufacturing food in containers in that, unlike the apparatus 100, it is not provided with a container sterilizing H₂O₂ bath 140, a dryer nozzle 150, a germ-free air container 152 and a valve 160 and hence it is not necessary to feed no germ-free air a germ-free air container. In other words, ordinary air 570 is used in place of germ-free air.

Then, unlike the jacket 180 of the first embodiment of apparatus 100 for manufacturing food in containers as illustrated in FIG. 2, the jacket 580 of the second embodiment of apparatus 500 for manufacturing food in containers has two extensions 580a and 580b, which prevents germ-free steam 188 from being discharged to the outside of the casing 138.

Thus, germ-free steam 188 prevails in areas above the steam/air interface 582.

For manufacturing food in containers by using of this embodiment of apparatus 500, containers 120 are fed into the atmosphere of germ-free steam 188 in the apparatus 500 for manufacturing food in containers with their openings facing downward. Then, the containers 120 are turned upside down to make their openings face upward.

Thus, containers 120 are prevented from moving into the atmosphere of germ-free steam 188 with air trapped in the inside of the containers 120 when the containers 120 are moved into the apparatus 100.

With another mode of carrying out a method of manufacturing food in containers, containers 120 are moved into the atmosphere of germ-free air 188 in the apparatus 500 for manufacturing food in containers after passing through a steam/air interface 582, while turning the containers 120. Then, the containers 120 are held in the atmosphere of germ-free steam 188 with their openings 120a facing upward.

With such an arrangement of moving containers, they are also prevented from moving into the atmosphere of steam with air trapped in the inside of the containers.

As seen from the above description, the present invention provides an apparatus for manufacturing food in containers having a simplified configuration and a simplified method of manufacturing food in containers that can reliably sterilize containers in an atmosphere of steam and hence maintain the quality of sterilized food.

Thus, the present invention provides the following advantages.
(1) It can maintain the inside of an apparatus for manufacturing food in containers germ-free.
(2) It can reliably sterilize the inside of an apparatus for manufacturing food in containers.
(3) It can manufacture food in containers, moving the containers into a steam chamber without air trapped in the inside of the containers so that the containers remain free from air and hence can maintain the quality of the food for a long period of time.
(4) The steam contained in the head space of each container can reliably be replaced by inert gas in a steam atmosphere at a stabilized temperature level without disturbing the steam atmosphere.

## Claims

1. An apparatus for manufacturing food in containers adapted to sealing containers containing sterilized food in a steam atmosphere, said apparatus comprising:
a casing for containing steam; and
a heating means for maintaining the inner wall of said casing in a heated state.

2. A method of sterilizing an apparatus for manufacturing food in containers comprising steps of:
heating the wall surface of a casing for containing steam;
injecting an atomized or vaporized germicidal agent into the inside of said apparatus; and
replacing said germicidal agent in the inside of said apparatus with steam.

3. A method of manufacturing food in containers comprising steps of:
sterilizing containers;
moving said containers into a germ-free air chamber;
moving said containers into a steam chamber of an apparatus for manufacturing food in containers with the openings of the containers facing downward; and
turning said containers so as to make their openings face upward in said steam chamber.

4. A method of manufacturing food in containers comprising steps of:
sterilizing containers;
moving said containers into a germ-free air chamber;
moving said containers into a steam chamber of an apparatus for manufacturing food in containers through the interface between the germ-free air and the steam, while turning said container so as to make their openings face downward; and
holding said container in the steam chamber with their openings facing upward.

5. A method of manufacturing food in containers comprising steps of:
moving containers into a steam chamber of an apparatus for manufacturing food in containers with the openings of the containers facing downward; and
turning said containers so as to make their openings face upward in said steam chamber.

6. A method of manufacturing food in containers comprising steps of:
moving containers into a steam chamber of an apparatus for manufacturing food in containers through the interface between a germ-free air and the steam, while turning said container so as to make their openings face downward; and
holding said container in the steam chamber with their openings facing upward.

7. A method of manufacturing food in containers comprising steps of:
filling containers with food and sterilizing the food in a steam chamber or filling sterilized containers with food in a steam chamber;
causing inert gas to flow into the head spaces of said containers in a steam atmosphere; and
subsequently sealing said containers in the steam atmosphere.

8. A method of manufacturing food in containers according to claim 7, wherein the temperature of the inert gas is between 0° C and 50 ° C and the flow rate of inert gas is between 3 m/min and 60 m/min.
